(19)

Europäisches
Patentamt
European
Patent Office
Office européen
des brevets

(11) **EP 1 837 677 A1**

(12) **EUROPEAN PATENT APPLICATION**
published in accordance with Art. 158(3) EPC

(43) Date of publication:
**26.09.2007 Bulletin 2007/39**

(21) Application number: **05820228.4**

(22) Date of filing: **26.12.2005**

(51) Int Cl.:
*G01S 13/32* $^{(2006.01)}$  *G01S 7/40* $^{(2006.01)}$
*G08B 13/16* $^{(2006.01)}$  *G01V 3/12* $^{(2006.01)}$

(86) International application number:
**PCT/JP2005/023775**

(87) International publication number:
**WO 2006/073080 (13.07.2006 Gazette 2006/28)**

(84) Designated Contracting States:
**FR GB**

(30) Priority: **07.01.2005 JP 2005002356**

(71) Applicant: **OPTEX CO. LTD.**
**Otsu-shi,**
**Shiga 520-0801 (JP)**

(72) Inventor: **TSUJI, Masatoshi**
**Otsu-shi, Shiga 5200101 (JP)**

(74) Representative: **Harland, Linda Jane**
**c/o Reddie & Grose**
**16 Theobalds Road**
**London WC1X 8PL (GB)**

(54) **MICROWAVE SENSOR**

(57) According to one embodiment, a microwave sensor includes: a first directional coupler (DC1) connected on a path of a transmission antenna unit (A1); a second directional coupler (DC2) connected on a path of a reception antenna unit (A2), and a determination unit (4) that obtains, based on monitor outputs from these, a scattering parameter $S_{11}$ corresponding to a reflectance property at the transmission antenna unit (A1) and a scattering parameter $S_{21}$ corresponding to a transmission property from the transmission antenna unit (A1) to the reception antenna unit (A2), and outputs an alarm signal (Dout2) when at least one of the scattering parameter $S_{11}$ and the scattering parameter $S_{21}$ continuously exhibits a value outside its respective pre-set range over a predetermined period of time.

FIG.1

EP 1 837 677 A1

**Description**

Technical Field

The present invention relates to a microwave sensor that detects an intruder or the like by microwaves, and particularly to a microwave sensor capable of countering measures such as masking using a metal plate or the like.

Background Art

Conventionally, as one form of a crime prevention sensor, microwave sensors are known (see Patent Document 1, for example) in which microwaves are emitted toward a detection area, and when a human body (an intruder) is present in the detection area, the human body is detected by receiving the reflected waves (microwaves modulated due to the Doppler effect) from the human body.

Moreover, one type of microwave sensor is known that uses a plurality of microwaves of different frequencies to measure the distance to an object (hereinafter referred to as "target") such as a human body that is present in the detection area. This type of sensor emits, for example, two microwaves of different frequencies toward the detection area and detects the phase difference between two IF signals based on the respective reflected waves. The phase difference has a mutual relation to the distance to the target in that there is a tendency for the phase difference to also increase for larger distances to the target. In other words, it is possible to measure the distance to the target by determining the phase difference. Furthermore, by identifying temporal changes in the phase difference, it is also possible to determine whether or not the target is moving in the detection area. This makes it possible, for example, to determine only a target that is moving in the detection area as the target (intruder) intended to be detected.

However, as a measure used against the microwave sensors, so called "masking" is sometimes performed in which the antenna units of the microwave sensors are covered with a metal plate or metal box, or a metal tape is attached thereto. In this case, the radiation of electromagnetic fields of the microwaves emitted from the antenna unit is hampered, causing problems in monitoring of targets in the detection area.

In view of the above, a combined sensor system is proposed (see Patent Document 2, for example) that enables the detection of masking by a combination of a microwave sensor and a passive infrared sensor (PIR sensor). This combined sensor system includes: a sensor unit having a first sensor that transmits electromagnetic waves having a frequency lower than that of visible light toward a detection area and receives reflected waves from a human body to detect the human body and a second sensor that detects the human body by receiving an infrared beam from the human body present in a second detection area overlapping the detection area; a first detection circuit that detects the presence of the human body in the detection area when a first detection signal from the first sensor exceeds a first threshold value; a second detection circuit that detects that the human body is approaching the sensor unit when the first detection signal from the first sensor exceeds a second threshold value that is higher than the first threshold value; a third detection circuit that detects the presence of the human body in the detection area when the second detection signal from the second sensor exceeds a third threshold value; and a determination circuit that, when no detection occurs in the third detection circuit within a predetermined period of time after the detection by the second detection circuit, determines that an interfering action has occurred and outputs an interference detection signal.

Patent Document 1: JP H7-37176A
Patent Document 2: JP H11-39574A

Disclosure of Invention

Problem to be Solved by the Invention

However, a conventional technique such as that disclosed in Patent Document 2 mentioned above requires a passive infrared sensor in addition to a microwave sensor, causing an increase in size as a whole, a complicated constitution, a cost increase and the like.

In view of the problem encountered with the conventional technique, it is an object of the present invention to provide a microwave sensor capable of detecting masking using a metal plate or the like without the addition of a passive infrared sensor or the like.

Means for Solving Problem

In order to achieve the above object, the microwave sensor of the present invention is a microwave sensor that transmits microwaves toward a detection area from a transmission antenna unit, receives reflected waves of the microwaves reflected by an object present in the detection area at a reception antenna unit, and carries out an object detection operation based on the received reflected waves, the microwave sensor comprising: a first directional coupler connected on a path of the transmission antenna unit; a second directional coupler connected on a path of the reception antenna unit, and a determination unit that obtains, based on monitor outputs from the first directional coupler and the second directional coupler, a scattering parameter $S_{11}$ corresponding to a reflectance property at the transmission antenna unit and a scattering parameter $S_{21}$ corresponding to a transmission property from the transmission antenna unit to the reception antenna unit, and outputs an alarm signal when at least one of the scattering parameter $S_{11}$ and the scattering parameter $S_{21}$ continuously exhibits a value outside its respective pre-set range over a predetermined period of time.

According to the microwave sensor configured as above, with an increase in the values of the scattering parameter $S_{11}$ and the scattering parameter $S_{21}$, it is possible to determine that a metal plate or the like is approaching the transmission antenna unit or the reception antenna unit. Thereby, it is possible to detect masking using a metal plate or the like and set off an alarm. Because there is no need to add a passive infrared sensor or the like, it is possible to avoid, as much as possible, an increase in size as a whole, a cost increase and the like.

Further, in the microwave sensor of the present invention, it is possible that the determination unit outputs the alarm signal when an absolute value of the scattering parameter $S_{11}$ is not less than a first reference value, or when an absolute value of the scattering parameter $S_{21}$ is not less than a second reference value.

According to the microwave sensor configured as above, both the absolute values of the scattering parameter $S_{11}$ and the scattering parameter $S_{21}$ are used. Thereby, it is possible to increase the detectable distance for a metal plate or the like, and to avoid, as much as possible, detection failure that occurs when only either one of the absolute values is used.

Further, in the microwave sensor of the present invention, it is possible that the determination unit monitors the scattering parameter $S_{11}$ as a vector value, and outputs the alarm signal when the scattering parameter $S_{11}$ falls outside a pre-set region.

According to the microwave sensor configured as above, because the scattering parameter $S_{11}$ is monitored as a vector value, unlike the absolute value of the scattering parameter $S_{11}$ monitored as a scalar value, it is possible to more accurately determine whether or not the scattering parameter $S_{11}$ falls within a normal region. Thereby, detection capability can be improved, compared to the case where it is monitored as a scalar value.

Effects of the Invention

According to the microwave sensor of the present invention, with an increase in the values of the scattering parameter $S_{11}$ and the scattering parameter $S_{21}$, it is possible to determine that a metal plate or the like is approaching the transmission antenna unit or the reception antenna unit. Thereby, it is possible to detect masking using a metal plate or the like and set off an alarm. Because there is no need to add a passive infrared sensor or the like, it is possible to avoid, as much as possible, an increase in size as a whole, a cost increase and the like.

Brief Description of Drawings

[FIG. 1] FIG. 1 is a schematic diagram of the configuration of a microwave sensor according to an embodiment of the present invention.
[FIG. 2] FIG. 2 is an example result obtained when a scattering parameter $S_{11}$ and a scattering parameter $S_{21}$ are measured while varying the distance to a metal plate in a microwave sensor according to the above embodiment.
[FIG. 3] FIG. 3 is a Smith chart on which the scattering parameter $S_{11}$ of the measurement result of FIG. 2 is plotted.
[FIG. 4] FIG. 4 is a graph with a logarithmic axis showing the absolute values of the scattering parameter $S_{11}$ and scattering parameter $S_{21}$ of the measurement result of FIG. 2.

Description of Reference Numerals

1          Microwave sensor
2          RF module
21        Oscillator
22        Modulator
25        Mixer
3          Signal processing unit

| 31,32,33 | Power source |
| 34, 35 | IF amplifier |
| 36, 37 | Comparator |
| L1 | First output line |
| L2 | Second output line |
| SW1 | First switch |
| SW2 | Second switch |
| 4 | Determination circuit |
| 5 | Metal plate |
| A1 | Transmission antenna |
| A2 | Reception antenna |
| DC1 | Directional coupler (transmission side) |
| DC2 | Directional coupler (reception side) |
| Dout 1 | Object detection signal |
| Dout 2 | Alarm signal |

Description of the Preferred Embodiments

Hereinafter, an embodiment of the present invention will be described with reference to the drawings.

<Circuit configuration of microwave sensor 1 and detection operation of human body or the like>

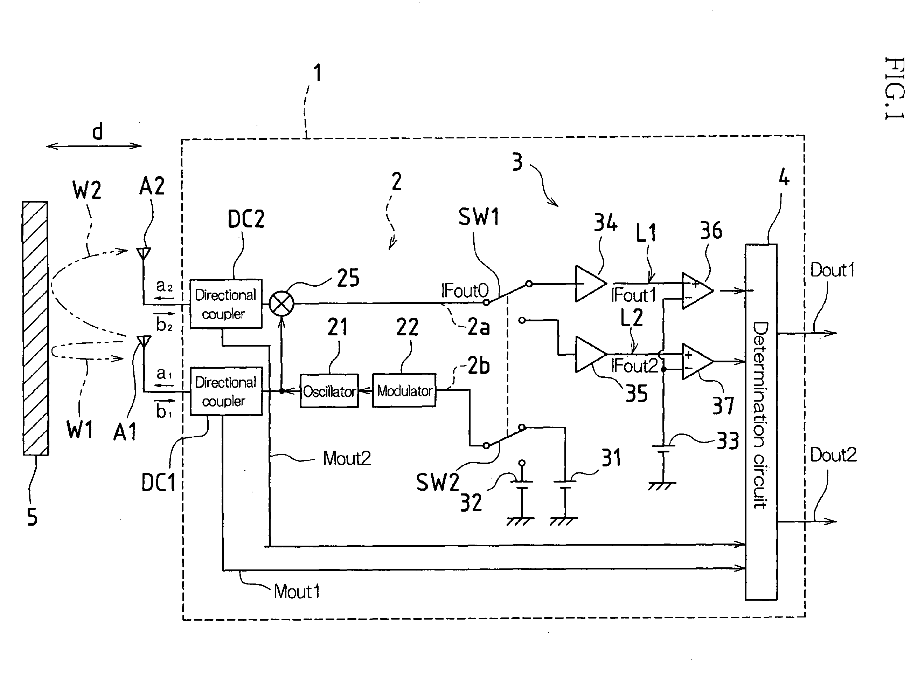

FIG. 1 is a schematic diagram of the configuration of a microwave sensor 1 according to an embodiment of the present invention. As shown in FIG. 1, a microwave sensor 1 includes an RF module 2 that performs transmission and reception of microwaves, a signal processing unit 3 that processes a signal output from the RF module 2, and a determination circuit 4 that detects a human body or the like based on the output from the signal processing unit 3 and detects masking or the like based on scattering parameters detected by the RF module 2.

The RF module 2 is provided with an oscillator 21 that generates microwaves, a modulator 22 for switching the frequencies of microwaves generated by the oscillator 21, a transmission antenna A1 that transmits the microwaves generated by the oscillator 21 toward a detection area, a reception antenna A2 that receives the reflected waves of the microwaves reflected by an object such as a human body, and a mixer 25 that mixes the microwaves received by the reception antenna A2 and the voltage waveforms of the oscillator 21 and outputs the result. More specifically, microwaves are transmitted from the transmission antenna A1 toward a detection area, and when, for example, a human body or the like is present in the detection area, the reflected waves from the human body or the like with the frequency modulated due to the Doppler effect are received by the reception antenna A2. The received reflected waves are mixed with the voltage waveforms of the oscillator 21 by the mixer 25, and are then output as an IF output signal (IFout 0) from an output side 2a of the RF module 2 to the signal processing unit 3.

The transmission antenna A1 and the oscillator 21 are connected via a directional coupler DC1 at the transmission side, and a monitor output Mout1 of the directional coupler DC1 is connected to the determination circuit 4. Similarly, the reception antenna A2 and the mixer 25 are connected via a directional coupler DC2 at the reception side, and a monitor output Mout2 of the directional coupler DC2 is connected to the determination circuit 4. As used herein, a "directional coupler" is a device commonly called a "coupler" and is used for routing for isolating, separating and combining signals such as microwaves. In this microwave sensor 1, the directional coupler DC1 is used to monitor the signal of the transmission antenna A1, and the directional coupler DC2 is used to monitor the signal of the reception antenna A2.

Corresponding to the frequencies of the microwaves transmitted from the transmission antenna A1, the signal processing unit 3 is provided with a first output line L1 having an IF amplifier 34 and a comparator 36 and a second output line L2 having an IF amplifier 35 and a comparator 37, as well as a power source 33 that is the reference voltage of the comparators 36 and 37. Further still, power sources 31 and 32 are provided in order for the RF module 2 to generate two types of microwaves, and the outputs of the comparators 36 and 37 are connected to the determination circuit 4.

The IF amplifiers 34 and 35 are connected to the output side 2a of the RF module 2 via a first switch SW1. The first switch SW1 is switchable in that it connects to the first output line L1 when one of the above-mentioned two types of microwaves is transmitted from the transmission antenna A1 and connects to the second output line L2 when the other type of the microwaves is transmitted from the transmission antenna A1. That is, it is configured so that an IF output signal pertaining to reflected waves reflected by a human body or the like is output to the first output line L1 when one type of the microwaves is being transmitted and an IF output signal pertaining to reflected waves reflected by a human body or the like is output to the second output line L2 when the other type of the microwaves is being transmitted.

The power sources 31 and 32 are connected to an input side 2b of the RF module 2 via a second switch SW2 that works together with the above-mentioned first switch SW1. The connection state of the second switch SW2 to the power source 31 or 32 also changes depending on which type of microwave of the two types of microwaves is transmitted from the transmission antenna A1. That is, the frequency of microwaves from the modulator 22 switches between a state in which the second switch SW2 is connected to the power source 31 on the one hand and a state in which it is connected to the power source 32 on the other hand, and in this way the frequency of microwaves transmitted from the transmission antenna A1 is switchable.

Further, along with the switching operation of the first switch SW1 and the second switch SW2, two processing operations (a first processing operation and a second processing operation) are switched at a predetermined time interval (for example, an interval of several milliseconds). Here, the first processing operation is an operation in which one of the frequencies of microwaves is transmitted from the transmission antenna A1 toward the detection area, an IF output signal based on the reflected waves thereof is output to the first output line L1 of the signal processing unit 3, and signal processing is performed in the first output line L1. The second processing operation is an operation in which the other of the frequencies of microwaves is transmitted from the transmission antenna A1 toward the detection area, an IF output signal based on the reflected waves thereof is output to the second output line L2 of the signal processing unit 3, and signal processing is performed in the second output line L2. In the first processing operation, the IF output signal that is output from the RF module 2 is amplified by the IF amplifier 34, and the output (IFout 1) from the IF amplifier 34 is formed into a rectangular wave by the comparator 36 then output to the determination circuit 4. Similarly, in the second processing operation, the IF output signal that is output from the RF module 2 is amplified by the IF amplifier 35, and the output (IFout 2) from the IF amplifier 35 is formed into another rectangular wave by the comparator 37 then output to the determination circuit 4.

When there is no object such as a human body present in the detection area, the frequency of the microwaves transmitted from the transmission antenna A1 and the frequency of the microwaves received at the reception antenna A2 are the same, and therefore the IF frequency in the output signals from the IF amplifiers 34 and 35 is "0," and no signal is output from the comparators 36 and 37. In contrast to this, when a human body or the like is present in the detection area, the microwaves received at the reception antenna A2 are modulated with respect to the frequency of the microwaves that were transmitted from the transmission antenna A1 and have a different frequency, and therefore a change is produced in the waveforms of the output signals of the comparators 36 and 37, and these rectangular waves are output to the determination circuit 4.

The determination circuit 4 receives the output signal waveforms from the comparators 36 and 37 and obtains the relative distance to an object present in the detection area based on these output signal waveforms. That is, it is configured to measure the relative distance to an object based on the phase difference of the microwaves reflected from the object present in the detection area. As described above, the phase difference of the two IF output signals (IFout 1 and IFout 2) has a mutual relation to the distance to the object (target) in that the phase difference has a tendency to increase for larger distances to the object. Accordingly, by obtaining this phase difference, the distance to the object can be measured. Subsequently, the moving distance per unit time of an object present in the detection area (not the speed, but a distance that the object actually has moved in, for example, one second) is obtained. More specifically, the moving distance of the object per unit time is obtained by measuring the amount of change per unit time in the relative distance to the object measured in the above described manner. The moving distance per unit time of the object thus obtained is then compared to a pre-set threshold value determined according to the relative distance to the object. When the amount of change (the moving distance of the object) is larger, the determination circuit 4 determines the object as an object to be detected (a human body), and outputs an object detection signal Dout1.

<Detection operation of masking>

Still referring to FIG. 1, a description will now be given of a detection operation of masking in which a metal plate or the like is covered.

For example, when a metal plate 5 comes close to the transmission antenna A1 and the reception antenna A2 of the microwave sensor 1, the electromagnetic fields of the microwaves radiated from the transmission antenna A1 are reflected by the metal plate 5. The intensity of the reflected waves increases with a decrease in distance d from the transmission antenna A1 and the reception antenna A2 to the metal plate 5. Eventually, most of the electromagnetic fields of the microwaves radiated from the transmission antenna A1 are reflected. At this time, part of the reflected waves W2 is input to the reception antenna A2, whereas another part of the reflected waves W1 returns to the transmission antenna A1 and is input thereinto.

Here, scattering parameters (S parameters) of a two-port circuit having the transmission antenna A1 as a port 1 and the reception antenna A2 as a port 2 are defined by the following equation, where $a_1$ represents an input wave amplitude at the port 1, $b_1$ represents an output wave amplitude at the port 1, $a_2$ represents an input wave amplitude at the port 2, and $b_2$ represents an output wave amplitude at the port 2.

[Equation 1]

$$\begin{bmatrix} b_1 \\ b_2 \end{bmatrix} = \begin{bmatrix} S_{11} & S_{12} \\ S_{21} & S_{22} \end{bmatrix} \begin{bmatrix} a_1 \\ a_2 \end{bmatrix}$$

In these scattering parameters, $S_{11}$ and $S_{22}$ indicate a reflectance property at each port, and $S_{12}$ and $S_{21}$ indicate a transmission property between the ports.

In the RF module 2 of the microwave sensor 1, the scattering parameter $S_{11}$ corresponding to the reflectance property (derived from the reflected wave W1) at the transmission antenna A1, and the scattering parameter $S_{21}$ corresponding to the transmission property (derived from the reflected wave W2) from the transmission antenna A1 to the reception antenna A2 can be obtained based on the monitor output Mout1 of the directional coupler DC1 connected on the path to the transmission antenna A1 and the monitor output Mout2 of the directional coupler DC2 connected on the path to the transmission antenna A1.

When the distance d to the metal plate 5 is small, the levels of the scattering parameter $S_{11}$ and the scattering parameter $S_{21}$ increase excessively, compared to the normal case where the metal plate 5 is not present, and such a state continues for a long time.

The determination circuit 4 continuously monitors each level of the scattering parameter $S_{11}$ and the scattering parameter $S_{21}$. For example, when at least one of them continuously exhibits a value exceeding its respective pre-set reference value over a predetermined period of time, the determination circuit 4 determines that masking using the metal plate 5 or the like is performed, and an alarm signal Dout2 is output.

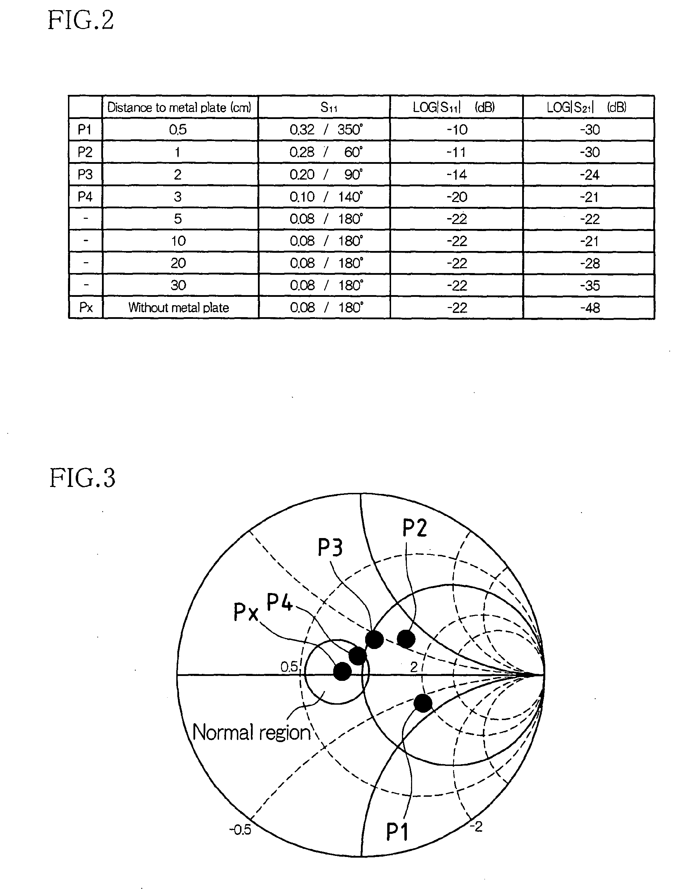

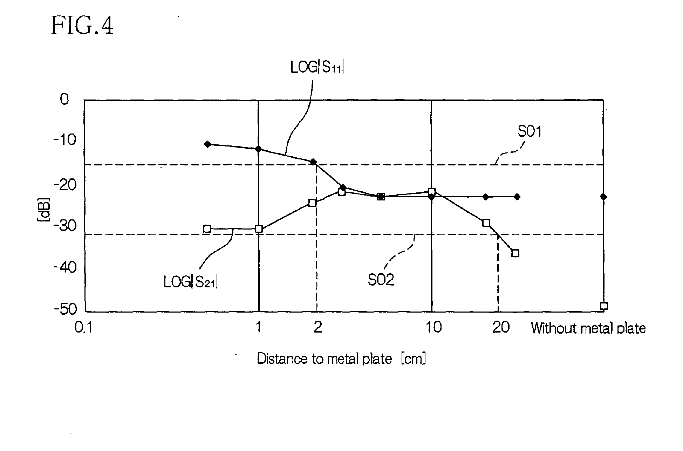

FIG. 2 is an example result obtained when, in the microwave sensor 1 of this embodiment, the scattering parameter $S_{11}$ and the scattering parameter $S_{21}$ are measured while varying the distance d to the metal plate 5. FIG. 3 is a Smith chart on which the scattering parameter $S_{11}$ of this measurement result is plotted. FIG. 4 is a graph with a logarithmic axis showing the absolute values of the scattering parameter $S_{11}$ and scattering parameter $S_{21}$ of this measurement result.

As shown in FIGS. 2 and 4, the absolute value of scattering parameter $S_{11}$ is represented as a scalar value, and is about -22 dB when the metal plate 5 is not present or is sufficiently far away. When the distance d to the metal plate 5 is less than about 3 cm, the absolute value of scattering parameter $S_{11}$ starts increasing rapidly, and reaches about -14 dB when the distance d is 2 cm, and about -10 dB when the distance d is 0.5 cm.

Accordingly, by setting a reference value S01 of the absolute value of scattering parameter $S_{11}$ to be, for example, -15 dB, when the absolute value of scattering parameter $S_{11}$ exceeds this reference value S01, it is possible to determine that the metal plate 5 or the like is present within a distance of about 2 cm from the transmission antenna A1 and the reception antenna A2. In other words, in this case, the detectable distance range for masking is within about 2 cm. However, in order to prevent detection errors or the like as much as possible, it is preferable that the determination is performed after confirming that the absolute value of scattering parameter $S_{11}$ continuously exceeds the reference value S01 over a predetermined period of time. This applies to other determination methods described below.

Further, FIG. 3 is obtained by plotting, on a Smith chart (impedance chart), some of the data of the measurement result of the scattering parameter $S_{11}$ as a vector value. A small circle that is in the center portion and includes a corresponding position Px that indicates the absence of the metal plate 5 represents a normal region (a state in which masking or the like is not performed). A corresponding position P4, where the distance d to the metal plate 5 is 3 cm, is approximately on the perimeter of the circle. A corresponding position P3, where the distance d is 2 cm, a corresponding position P2, where the distance d is 1 cm, and a corresponding position P1, where the distance d is 0.5 cm, are outside this circle.

Accordingly, by monitoring the measurement result of scattering parameter $S_{11}$ as a vector value, masking can be identified by whether or not the measurement result of scattering parameter $S_{11}$ falls within this circle. In this case, the detectable distance range for masking is about within about 3 cm. This indicates that detection capability is improved by monitoring the absolute value of scattering parameter $S_{11}$ as a vector value, compared to by monitoring the same as a scalar value as described above.

When the metal plate 5 is not present or is sufficiently far away, the absolute value of scattering parameter $S_{21}$ is about -48 dB. When the distance d to the metal plate 5 becomes smaller, specifically, the distance d is about 30 cm, the absolute value of scattering parameter $S_{21}$ is about -35 dB. The absolute value increases gradually with an increase in distance d, and reaches about -21 dB when the distance d reaches about 10 cm. Thereafter, even when the distance d decreases, there is little change in the absolute value of scattering parameter $S_{21}$. When the distance d is less than about 3 cm, the absolute value of scattering parameter $S_{21}$ starts decreasing again. This is because, when the metal plate 5 comes too close to the transmission antenna A1 and the reception antenna A2, the direction of the reflected waves of the microwaves radiated from the transmission antenna A1 moves away from the reception antenna A2.

By setting a reference value S02 of the absolute value of scattering parameter $S_{21}$ to be, for example, -30 dB, when the absolute value of scattering parameter $S_{21}$ exceeds this reference value S02, it is possible to determine that the metal plate 5 or the like is present within a distance of about 20 cm from the transmission antenna A1 and the reception antenna A2. In other words, in this case, the detectable distance range for masking is increased to within about 20 cm.

Using only the absolute value of scattering parameter $S_{21}$, when the distance d is extremely small, detection may not be possible. However, with a combined use of the measurement result of scattering parameter $S_{21}$ with that of scattering parameter $S_{11}$, it is possible to avoid such detection failure and to ensure a broad detectable range.

The reference values and the like described above are given as merely an example. In an actual microwave sensor 1, each reference value may be determined based on data previously measured under various conditions with consideration of possible variations in the product. Alternatively, each reference value may be determined based on measured data measured in a state where the microwave sensor 1 is installed during installation or the like.

<Other Embodiments>

The application of the present invention is not limited to a microwave sensor that detects a target detection object using microwaves of two different frequencies, and may be applied to a microwave sensor that detects a target detection object using microwaves of a single frequency and to a microwave sensor that detects a target detection object using microwaves of three or more different frequencies.

The present invention can be embodied and practiced in other different forms without departing from the spirit and essential characteristics thereof. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein.

This application claims priority on Patent Application No. 2005-2356 filed in Japan on January 7, 2005, the contents of which are hereby incorporated by reference. All references cited herein are also hereby specifically incorporated by reference.

Industrial Applicability

The present invention is applicable as, for example, a crime prevention sensor, and suitable as a microwave sensor that detects an intruder by microwaves, and the like.

**Claims**

1. A microwave sensor that transmits microwaves toward a detection area from a transmission antenna unit, receives reflected waves of the microwaves reflected by an object present in the detection area at a reception antenna unit, and carries out an object detection operation based on the received reflected waves, the microwave sensor comprising:

   a first directional coupler connected on a path of the transmission antenna unit;
   a second directional coupler connected on a path of the reception antenna unit, and
   a determination unit that obtains, based on monitor outputs from the first directional coupler and the second directional coupler, a scattering parameter $S_{11}$ corresponding to a reflectance property at the transmission antenna unit and a scattering parameter $S_{21}$ corresponding to a transmission property from the transmission antenna unit to the reception antenna unit, and outputs an alarm signal when at least one of the scattering parameter $S_{11}$ and the scattering parameter $S_{21}$ continuously exhibits a value outside its respective pre-set range over a predetermined period of time.

2. The microwave sensor according to claim 1,
   wherein the determination unit outputs the alarm signal when an absolute value of the scattering parameter $S_{11}$ is not less than a first reference value, or when an absolute value of the scattering parameter $S_{21}$ is not less than a second reference value.

3. The microwave sensor according to claim 1,
   wherein the determination unit monitors the scattering parameter $S_{11}$ as a vector value, and outputs the alarm signal when the scattering parameter $S_{11}$ falls outside a pre-set region.

FIG.1

FIG.2

| | Distance to metal plate (cm) | S₁₁ | LOG\|S₁₁\|  (dB) | LOG\|S₂₁\|  (dB) |
|---|---|---|---|---|
| P1 | 0.5 | 0.32 / 350° | -10 | -30 |
| P2 | 1 | 0.28 / 60° | -11 | -30 |
| P3 | 2 | 0.20 / 90° | -14 | -24 |
| P4 | 3 | 0.10 / 140° | -20 | -21 |
| - | 5 | 0.08 / 180° | -22 | -22 |
| - | 10 | 0.08 / 180° | -22 | -21 |
| - | 20 | 0.08 / 180° | -22 | -28 |
| - | 30 | 0.08 / 180° | -22 | -35 |
| Px | Without metal plate | 0.08 / 180° | -22 | -48 |

FIG.3

FIG.4

<div align="center">**INTERNATIONAL SEARCH REPORT**</div>

| International application No. |
| --- |
| PCT/JP2005/023775 |

A. CLASSIFICATION OF SUBJECT MATTER
*G01S13/32*(2006.01), *G01S7/40*(2006.01), *G08B13/16*(2006.01), *G01V3/12*
(2006.01)

According to International Patent Classification (IPC) or to both national classification and IPC

B. FIELDS SEARCHED

Minimum documentation searched (classification system followed by classification symbols)
*G01S13/32*(2006.01), *G01S7/40*(2006.01), *G08B13/16*(2006.01), *G01V3/12*
(2006.01)

Documentation searched other than minimum documentation to the extent that such documents are included in the fields searched
Jitsuyo Shinan Koho          1922-1996     Jitsuyo Shinan Toroku Koho    1996-2006
Kokai Jitsuyo Shinan Koho    1971-2006     Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2004/15446 A1 (Raytheon Co.), 19 February, 2004 (19.02.04), Full text; all drawings & US 6611227 B1          & EP 1529225 A & JP 2005-535876 A | 1-3 |
| A | JP 2002-540410 A (C&K Systems, Inc.), 26 November, 2002 (26.11.02), Full text; all drawings & US 6191688 B1          & EP 1078343 A & WO 00/57381 A1 | 1-3 |
| A | JP 7-29076 A (Oputikusu Kabushiki Kaisha), 31 January, 1995 (31.01.95), Full text; all drawings (Family: none) | 1-3 |

☒  Further documents are listed in the continuation of Box C.          ☐  See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 17 January, 2006 (17.01.06) | Date of mailing of the international search report 24 January, 2006 (24.01.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/023775

C (Continuation).    DOCUMENTS CONSIDERED TO BE RELEVANT

| Category* | Citation of document, with indication, where appropriate, of the relevant passages | Relevant to claim No. |
|---|---|---|
| A | JP 63-45697 A  (C&K Systems,  Inc.), <br> 26 February, 1988 (26.02.88), <br> Full text; all drawings <br> & US 4710750 A          & EP 259015 A2 | 1-3 |

Form PCT/ISA/210 (continuation of second sheet) (April 2005)

**EP 1 837 677 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H737176 A
- JP H1139574 A
- JP 2005002356 A